# EUROPÄISCHE PATENTSCHRIFT

(11) **EP 3 516 283 B1**
(45) Veröffentlichungstag und Bekanntmachung des Hinweises auf die Patenterteilung: **19.08.2020**
(21) Anmeldenummer: 17780328.5
(22) Anmeldetag: 19.09.2017
(51) Int. Cl.: F16L 35/00

(54) **TRINKWASSERKUPPLUNG MIT KONTAMINATIONSSCHUTZ**
DRINKING WATER COUPLING WITH CONTAMINATION PROTECTION
RACCORD POUR EAU POTABLE AVEC PROTECTION CONTRE LA CONTAMINATION

(30) Priorität: 19.09.2016 DE 202016105218 U
(43) Veröffentlichungstag der Anmeldung: 31.07.2019
(73) Patentinhaber: Hugo Vogelsang Maschinenbau GmbH, 49632 Essen (DE)
(72) Erfinder: WILKEN, Heinz, 49699 Lindern (DE)
(74) Vertreter: Eisenführ Speiser
(86) Internationale Anmeldenummer: PCT/EP2017/073650
(87) Internationale Veröffentlichungsnummer: WO 2018/050923

(56) Entgegenhaltungen:
- WO-A1-2012/004479
- DE-U1-202013 010 356
- GB-A- 2 453 542
- US-A- 4 481 977

## Beschreibung

Die Erfindung betrifft eine Trinkwasserkupplung zum Kuppeln mit einem Anschluss eines Trinkwassertanks, entsprechend den im Oberbegriff von Anspruch 1 definierten Merkmalen und wie sie beispielsweise aus US-A-4 481 977 bekannt ist.

Derartige Trinkwasserkupplungen werden beispielsweise im Bereich von Personenzügen oder auch Personenbussen eingesetzt, bei denen ein Trinkwassertank mit Trinkwasser zu befüllen ist. Üblicherweise weisen Personenzüge einen solchen Trinkwassertank auf, in dem Trinkwasser für die Sanitäranlagen vorgehalten wird. Ein Problem besteht hier bei der Kontamination der Trinkwasserkupplung im Betrieb, wenn ein Bediener unvorsichtig ist und das axiale Ende, das die Auslassöffnung aufweist, verschmutzt wird. Dieses Problem wird noch dadurch vergrößert, dass Personenwaggons üblicherweise auch einen Fäkalientank aufweisen, in dem Fäkalien aus den Sanitäranlagen gesammelt werden und welcher üblicherweise von dem gleichen Bedienpersonal, welches den Frischwassertank füllt, entleert wird. Häufig findet die Befüllung des Trinkwassertanks in etwa zeitgleich mit einer Entleerung des Fäkalientanks statt, wodurch die Gefahr der Kontamination der Trinkwasserkupplung besonders hoch ist. Wird hier nicht mit absoluter Vorsicht gearbeitet, ist eine Kontamination der Trinkwasserkupplung fast unausweichlich.

Es ist also eine Aufgabe der vorliegenden Erfindung, eine Trinkwasserkupplung der eingangs genannten Art bereitzustellen, die eine Kontamination des Trinkwassers verhindert.

Die Erfindung löst diese Aufgabe bei einer Trinkwasserkupplung der eingangs genannten Art durch eine Schutzeinrichtung zum Kontaminationsschutz, die dazu eingerichtet ist, wenigstens das erste axiale Ende in einem entkuppelten Zustand vor Kontamination durch Kontakt zu schützen.

Der Erfindung liegt der Gedanke zugrunde, dass Kontamination in der Regel im entkuppelten Zustand stattfindet, da im gekuppelten Zustand das erste axiale Ende des Stutzens mit einem entsprechenden Gegenstutzen der Gegenkupplung verbunden ist. Hierbei sind das Kupplungsglied und das Gegen-Kupplungsglied miteinander verbunden, sodass dann keine Kontamination stattfinden kann. Kontamination findet dann statt, wenn die Trinkwasserkupplung abgekuppelt ist und das erste axiale Ende frei zugänglich ist. Häufig wird die Trinkwasserkupplung dann von einem Bediener auf dem Boden abgelegt, und das erste axiale Ende, welches ungeschützt ist, kann kontaminiert werden. Die Kontamination wird erfindungsgemäß durch die Schutzeinrichtung verhindert. Diese Schutzeinrichtung schützt das erste axiale Ende, das die Auslassöffnung aufweist, vor Kontakt und damit vor Kontamination.

Der Stutzen bildet vorzugsweise den Grundkörper der Trinkwasserkupplung. Der Stutzen kann beispielsweise im Wesentlichen rohrförmig gebildet sein, und das erste axiale Ende kann beispielsweise in einem entsprechenden Rohrabschnitt der Gegenkupplung aufgenommen werden. Das erste Kupplungsglied ist vorzugsweise in etwa um das erste axiale Ende herum ausgebildet und ist in der Regel als sogenannte Bajonettkupplung ausgebildet. An dem ersten axialen Ende können zusätzlich Dichtungselemente, wie beispielsweise ein O-Ring oder dergleichen, angeordnet sein.

Das zweite axiale Ende der Trinkwasserkupplung dient dazu, diese mit einem entsprechenden Schlauch oder einer anderen Leitung eines Zuleitungssystems für Trinkwasser zu verbinden. Das zweite axiale Ende kann demnach eine übliche Schlauchkupplung oder dergleichen aufweisen. Grundsätzlich sind die Geometrie des Stutzens sowie die Geometrie der ersten und zweiten axialen Enden aus dem Stand der Technik bekannt und auch durch die weiteren Peripherieelemente, wie insbesondere die Gegenkupplung als auch die Trinkwasserzuleitungen vorgegeben.

Erfindungsgemäss weist die Schutzeinrichtung wenigstens ein beweglich an dem Stutzen gelagertes erstes Verschlusselement auf, welches zwischen einer geschlossenen Position, in der das Verschlusselement das erste axiale Ende wenigstens teilweise verschließt, und einer geöffneten Position, in der das Verschlusselement das erste axiale Ende freigibt, bewegbar ist. Ein solches Verschlusselement verschließt demnach das erste axiale Ende und bietet so einen physischen Schutz vor Kontakt. Ist das erste axiale Ende durch das Verschlusselement verschlossen, ist Kontakt mit dem ersten axialen Ende unmöglich, und eine Kontamination kann nicht stattfinden. Das erste Verschlusselement ist dabei an dem Stutzen gelagert, sodass es nicht verlorengehen kann. Es ist an dem Stutzen beweglich angeordnet und relativ zum Stutzen beweglich.

Dabei ist besonders bevorzugt, dass das Verschlusselement in die geschlossene Position vorgespannt ist. Vorzugsweise ist das Verschlusselement mittels einer Feder in die geschlossene Position vorgespannt. Durch eine solche Vorspannung wird sichergestellt, dass im entkuppelten Zustand das Verschlusselement in der geschlossenen Position ist und somit das erste axiale Ende vor Kontamination geschützt wird. Nach einem Entkuppeln der Trinkwasserkupplung kommt das erste Verschlusselement so selbsttätig in die geschlossene Position, und das erste axiale Ende ist unmittelbar vor Kontamination geschützt. Vor dem Kuppeln wird das erste Verschlusselement entsprechend manuell oder automatisch in die geöffnete Position bewegt.

Gemäß Erfindung ist ein Betätigungselement für die Schutzeinrichtung vorgesehen, welches durch einen Bediener betätigbar ist, sodass das erste axiale Ende zum Herstellen einer flüssigkeitsgängigen Verbindung freilegbar ist. Erfindungsgemäss ist das Betätigungselement mit dem Verschlusselement verbunden, und das Verschlusselement ist mittels des Betätigungselements in die geöffnete Position verbringbar. Folglich muss ein Bediener das Betätigungselement entsprechend betätigen, um das Verschlusselement in die geöffnete Position zu verbringen. Ist gleichzeitig vorgesehen, dass das Verschlusselement in die geschlossene Position vorgespannt ist, muss ein Bediener das Betätigungselement während der gesamten Bedienung der Trinkwasserkupplung betätigen, um das Verschlusselement in der geöffneten Position zu halten. Das heißt, solange das erste axiale Ende freigegeben ist und nicht fest mit der Gegenkupplung verbunden ist, muss ein Bediener das Betätigungselement betätigt halten. Hierdurch wird gleichzeitig ein Schutz erreicht, dass ein Bediener nicht selbst das axiale Ende kontaminieren kann. Der Bediener hält das Betätigungselement und kann daher mit der Hand, die das Betätigungselement betätigt, nicht das erste axiale Ende kontaminieren. Hierdurch wird ein zusätzlicher Schutz vor Kontamination erreicht.

Vorzugsweise ist das Betätigungselement entlang einer ersten Bewegungsbahn bewegbar und derart mit dem Verschlusselement gekuppelt, dass dieses bei Betätigung des Betätigungselements entlang einer zweiten Bewegungsbahn bewegbar ist. Besonders bevorzugt ist das Betätigungselement axial verschieblich am Stutzen gelagert. Weiter ist bevorzugt, dass das Verschlusselement zwischen der geschlossenen Position und der geöffneten Position verschwenkbar ist. Während das Betätigungselement axial verschoben wird, wird diese Bewegung, also in eine Rotationsbewegung des Verschlusselements umgesetzt und dieses verschwenkt. Beispielsweise ist das Betätigungselement axial hin zum zweiten axialen Ende des Stutzens beweglich, also weg von dem ersten axialen Ende. Hierdurch wird eine intuitive Bedienung erreicht. Das Betätigungselement ist im Betrieb hin zum Bediener, der die Trinkwasserkupplung hält, zu ziehen, um das erste Verschlusselement in die geöffnete Position zu bringen.

Weiterhin ist bevorzugt, dass die Trinkwasserkupplung ein zweites Verschlusselement aufweist, wobei das erste und das zweite Verschlusselement das erste axiale Ende gemeinsam verschließen. Beispielsweise sind die beiden Verschlusselemente aufeinander zu beweglich und werden zum Verbringen dieser in eine geöffnete Position auseinander bewegt. Auch die oben zum ersten Verschlusselement beschriebenen Merkmale gelten vorzugsweise für das zweite Verschlusselement entsprechend.

In einer besonders bevorzugten Ausführungsform ist das erste Verschlusselement im Wesentlichen teilkugelförmig gebildet. Vorzugsweise ist auch das zweite Verschlusselement im Wesentlichen teilkugelförmig gebildet. Beispielsweise sind die beiden Verschlusselemente in etwa viertelkugelförmig gebildet, wobei sie in etwa im Bereich ihrer Zentralachsen schwenkbar an dem Stutzen befestigt sind. So lässt sich das erste axiale Ende auf einfache Art und Weise öffnen und schließen. Teilkugeln haben ferner den Vorteil, dass sie gemeinsam in der geschlossenen Position eine teilkugelförmige Verschlussoberfläche für das erste axiale Ende bilden, dieses also durch eine Teilkugel teilweise eingehaust ist. Hierdurch wird nicht nur eine axiale Abdeckung des ersten axialen Endes erreicht, sondern eine teilweise Einhausung.

Gemäß einer weiteren bevorzugten Ausführungsform ist vorgesehen, dass die Trinkwasserkupplung einen Führungsgriff zum Führen und Halten der Trinkwasserkupplung beim Kuppeln aufweist. Ist das erste Kupplungsglied gemäß einer Bajonettkupplung gebildet, ist es erforderlich, die Trinkwasserkupplung zum Kuppeln mit dem entsprechenden Gegenstück an den Trinkwassertank zunächst axial zu führen und dann um seine Längsachse zu rotieren, um die Vorsprünge der Bajonettkupplung in Eingriff mit den entsprechenden Gegenvorsprüngen des Gegen-Kupplungsglieds zu bringen. Hierzu ist bevorzugt der Führungsgriff vorgesehen. Ist gleichzeitig ein handbetätigtes Betätigungsglied vorgesehen, muss ein Bediener die Trinkwasserkupplung beim Benutzen stets mit zwei Händen kontaktieren, nämlich mit einer ersten Hand an dem Betätigungselement und einer zweiten Hand an dem Führungsgriff. Auch hierdurch ist eine Kontamination des axialen Endes des Stutzens weitgehend vermieden. Beide Hände des Bedieners sind an entsprechenden Griffen angelegt, und dieser kann folglich nicht in Kontakt mit dem axialen Ende des Stutzens kommen.

Nachstehend wird die Erfindung anhand eines Ausführungsbeispiels unter Bezugnahme auf die beiliegenden Figuren näher erläutert. Dabei zeigen:

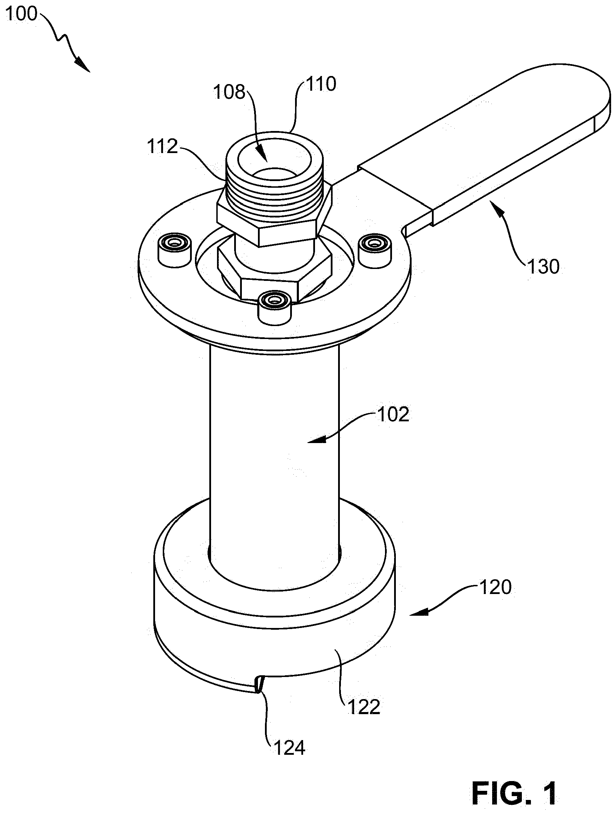

- Fig. 1: eine perspektivische Ansicht einer Trinkwasserkupplung gemäß dem Stand der Technik;
- Fig. 2: eine Schnittdarstellung durch die Trinkwasserkupplung aus Fig. 1;
- Fig. 3: eine perspektivische Ansicht einer Trinkwasserkupplung gemäß der Erfindung;
- Fig. 4: eine Seitenansicht der Trinkwasserkupplung aus Fig. 3 mit geschlossenen Verschlusselementen;
- Fig. 5: die Trinkwasserkupplung aus Fig. 4 mit geöffneten Verschlusselementen;
- Fig. 6: eine Draufsicht auf die Trinkwasserkupplung gemäß Fig. 4; und
- Fig. 7: eine Draufsicht auf die Trinkwasserkupplung gemäß Fig. 5.

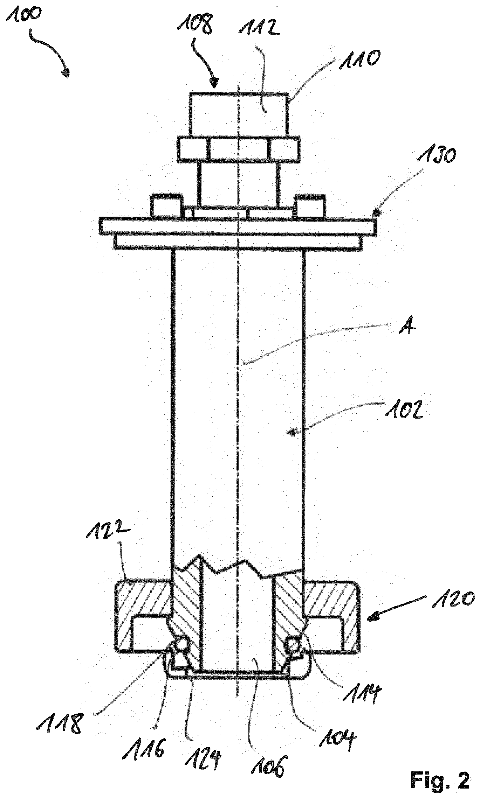

Aus dem Stand der Technik sind Trinkwasserkupplungen 100 bekannt, die einen Stutzen 102 aufweisen, der einen Grundkörper der Trinkwasserkupplung 100 bildet. Der Stutzen 102 (vgl. auch Fig. 2) weist ein erstes axiales Ende 104 auf, das eine Auslassöffnung 106 definiert. Die Auslassöffnung 106 ist in flüssigkeitsleitender Verbindung mit einer Einlassöffnung 108, die an dem zweiten axialen Ende 110 des Stutzens 102 ausgebildet ist. Das zweite axiale Ende 110 ist als Anschluss für einen Zuleitungsschlauch ausgebildet, der auf einen Gewindeabschnitt 112 mittels einer entsprechenden Mutter, insbesondere einer Schlauchmutter, aufschraubbar ist.

Das erste axiale Ende 104 weist einen sich konisch verjüngenden Abschnitt 114 auf, der dazu gedacht ist, in Anlage mit einem entsprechend konisch ausgebildeten Abschnitt einer Leitung eines Trinkwassertanks in Kontakt zu kommen. An dem konischen Abschnitt 114 ist zur Dichtung ein O-Ring 116 angeordnet, der in einer entsprechenden Nut 118 gehalten wird.

Als erstes Kupplungsglied 120 ist ein weibliches Kupplungsglied einer Bajonettkupplung vorgesehen. Das erste Kupplungsglied 120 weist folglich einen Kragen 122 auf, der drehfest mit dem Stutzen 102 verbunden ist. Der Kragen 122 weist gegenüberliegende hintergreifbare Vorsprünge 124 auf (in Fig. 2 nur einer zu sehen), die entsprechende radial erstreckende Vorsprünge einer Gegenkupplung an dem Frischwassertank hintergreifen. In einem angekuppelten Zustand ist die Öffnung 106 in flüssigkeitsleitender Verbindung mit dem Frischwassertank, und Frischwasser strömt von der Einlassöffnung 108 zur Auslassöffnung 106 und in den Frischwassertank hinein.

Zum Bedienen der Trinkwasserkupplung 100 ist ferner ein Führungsgriff 130 vorgesehen, der sich radial bezogen auf eine Längsachse A (vgl. Fig. 2) von dem Stutzen 102 erstreckt und ebenfalls drehfest mit diesem gekuppelt ist. Mit dem Führungsgriff 130 lässt sich die Trinkwasserkupplung 100 führen und auch der Kragen 122 samt Stutzen 102 rotieren, um eine Kupplung der Bajonettverbindung zu bewirken.

Wie sich insbesondere aus Fig. 2 ergibt, ist das axiale Ende 104 stets der Umgebung ausgesetzt, und eine Kontamination kann hier leicht stattfinden. Insbesondere ist es denkbar, dass ein Bediener, der beispielsweise verschmutzte Handschuhe trägt, da er zuvor einen Fäkalientank eines Personenwaggons geleert hat, in Kontakt kommt mit dem axialen Ende 104 oder auch in das Innere des Stutzens 102 greift. Hierdurch findet eine Kontamination des Frischwassers statt, welches durch den Stutzen strömt.

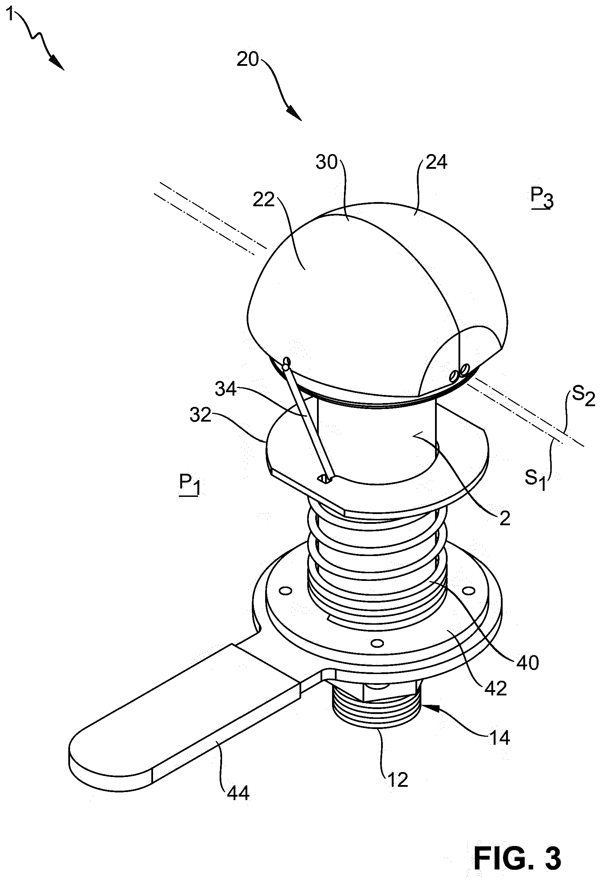

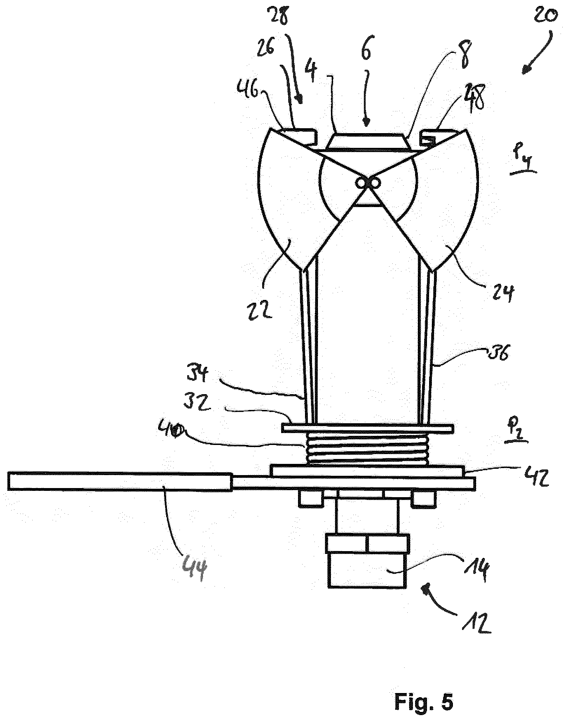

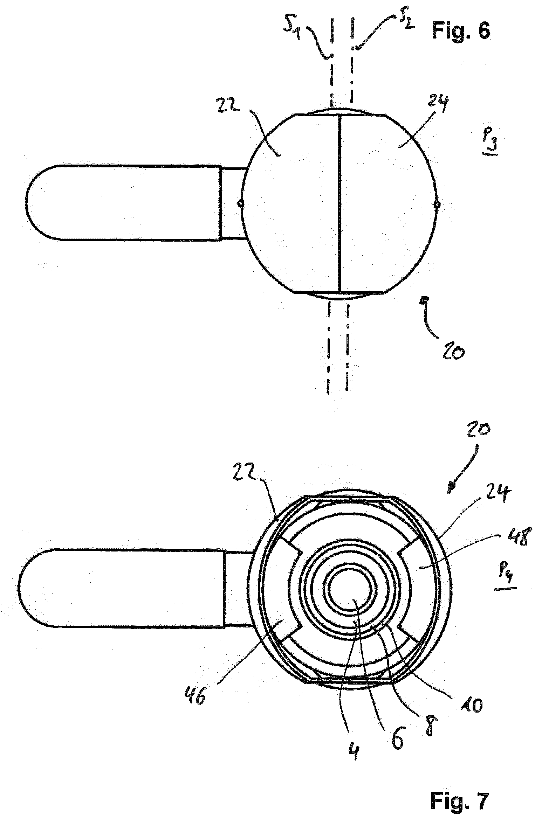

Die Erfindung hat diesen Nachteil erkannt und schlägt als Lösung eine Trinkwasserkupplung 1 gemäß der Erfindung vor (vgl. Fig. 3 - 7). Die Trinkwasserkupplung 1 ist im Grundprinzip ähnlich der Trinkwasserkupplung 100 gemäß dem Stand der Technik gebildet. Auch die Trinkwasserkupplung 1 gemäß der Erfindung weist einen Stutzen 2 auf, der den Grundkörper der Trinkwasserkupplung 1 bildet. Der Stutzen 2 weist ein erstes axiales Ende 4 auf (vgl. Fig. 5 und 7), welches eine Auslassöffnung 6 definiert. Das erste axiale Ende weist ebenfalls einen konischen Abschnitt 8 auf, an dem eine O-RingDichtung 10 (vgl. Fig. 7) angeordnet ist. Das erste axiale Ende 4 ist im Wesentlichen entsprechend dem ersten axialen Ende 104 gemäß dem Stand der Technik gebildet.

Auch das zweite axiale Ende 12 ist gebildet, wie im Stand der Technik bekannt. Der Grund ist, dass sowohl das erste als auch das zweite axiale Ende 4, 12 mit weiteren Anschlusselementen, nämlich dem entsprechenden Anschluss an dem Trinkwassertank, als auch einem Schlauch, verbindbar sein müssen. Deshalb weist auch das zweite axiale Ende 12 der Trinkwasserkupplung gemäß der Erfindung einen Gewindeabschnitt 14 auf, auf den eine Mutter einer Schlauchschelle schraubbar ist.

Erfindungsgemäß weist die Trinkwasserkupplung 1 eine Schutzeinrichtung 20 auf, die dazu eingerichtet ist, wenigstens das erste axiale Ende 4 in einem entkuppelten Zustand (vgl. Fig. 3, 4 und 6) vor Kontamination durch Kontakt zu schützen.

Die Schutzeinrichtung 20 weist gemäß diesem Ausführungsbeispiel ein erstes Verschlusselement 22 und ein zweites Verschlusselement 24 auf. Die beiden Verschlusselemente 22, 24 sind im Wesentlichen teilkugelförmig, nämlich viertelkugelförmig, gebildet und um erste und zweite Schwenkachsen S1, S2 (vgl. Fig. 3 und 6) schwenkbar. Wie sich aus den Fig. 3 bis 7 ergibt, überdecken die Verschlusselemente 22, 24 in dem geschlossenen Zustand (vgl. Fig. 3, 4 und 6) nicht nur das erste axiale Ende 4, sondern auch den darunter angeordneten Kragen 26 des ersten Kupplungsglieds 28, das auch bei der Trinkwasserkupplung 1 gemäß der Erfindung als Bajonettverschlusskupplung ausgebildet ist.

Die beiden Schwenkachsen S1, S2 verlaufen nahe an der Längsachse A und senkrecht zu dieser, sodass sich die Kontaktstelle 30 zwischen den ersten und zweiten Verschlusselementen 22, 24 im Wesentlichen mittig über dem ersten axialen Ende 4 erstreckt. Die Ebene, die durch die Kontaktstelle 30 definiert wird, beinhaltet in diesem Ausführungsbeispiel auch die Längsachse A.

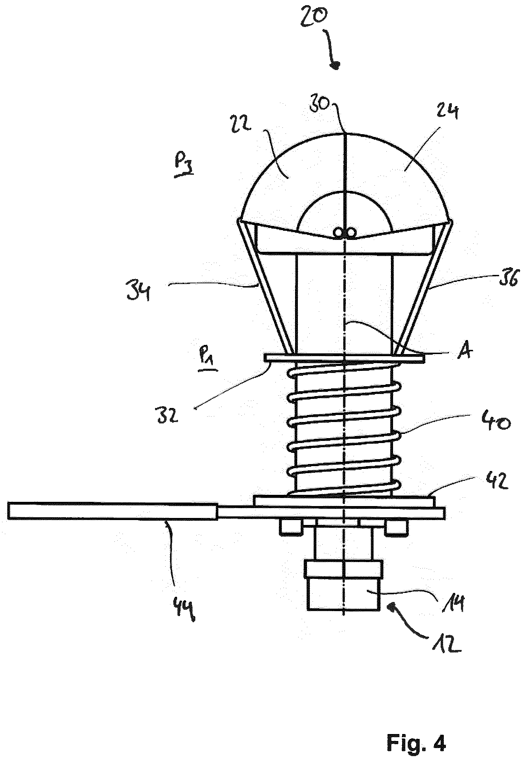

Zur Betätigung der Schutzeinrichtung 20, das heißt zum Öffnen der Schutzeinrichtung 20, ist ein Betätigungselement 32 vorgesehen, welches in diesem Ausführungsbeispiel als ringförmiger Körper ausgebildet ist. Das ringförmige Betätigungselement 32 ist axial entlang der Längsachse A verschieblich an dem Stutzen 2 gelagert. Es ist in eine obere Position P1 (vgl. Fig. 4) und in eine untere Position P2 (vgl. Fig. 5) bewegbar. Das Betätigungselement 32 ist über zwei Getriebestangen 34, 36 mit den ersten und zweiten Verschlusselementen 22, 24 schwenkbar verbunden. Bei Bewegen des Betätigungselements 32 von der ersten Position P1 in die zweite Position P2 ziehen die Getriebestangen 34, 36 an den entsprechenden Kontaktstellen an den ersten und zweiten Verschlusselementen 22, 24 und verschwenken diese um die Achsen S1, S2, sodass sich die Schutzeinrichtung 20 öffnet.

Die ersten und zweiten Verschlusselemente 22, 24 sind also ebenfalls von einer ersten Position P3 (vgl. Fig. 3, 4 und 6) in eine zweite geöffnete Position P4 verbringbar. In der geöffneten Position P4 sind sowohl das axiale Ende 4 als auch das erste Kupplungsglied 28 freigegeben.

Die ersten und zweiten Verschlusselemente 22, 24 sind in die geschlossene Position P3 (Fig. 3, 4 und 6) vorgespannt. Dazu ist in diesem Ausführungsbeispiel eine Spiraldruckfeder 40 vorgesehen. Die Feder 40 ist im Wesentlichen koaxial zur Achse A um einen Abschnitt des Stutzens 2 herum angeordnet. Sie stützt sich einerseits an dem Betätigungselement 32 ab und andererseits an einem radialen Kragen 42, der einen Teil eines Führungsgriff 44 bildet, der ebenfalls drehfest, wie im Stand der Technik bekannt, mit dem Stutzen 2 verbunden ist. Die Feder 40 ist also zwischen dem radialen Abschnitt 42 und dem Betätigungselement 32 angeordnet und drückt das Betätigungselement 32 in die erste Position P1.

Bei der Bedienung muss nun ein Bediener die Trinkwasserkupplung 1 an dem Führungsgriff 44 ergreifen und diese zu einer entsprechenden Gegenkupplung an einem Frischwassertank führen. Um die Trinkwasserkupplung 1 dann mit der entsprechenden Gegenkupplung zu kuppeln, muss zunächst die Schutzeinrichtung 20 geöffnet werden. Dazu ergreift der Bediener mit der anderen Hand das Betätigungselement 32, beispielsweise mit zwei Fingern, und zieht das Betätigungselement 32 zu sich hin, also in Richtung des Führungsgriff 44, sodass die Feder 40 komprimiert wird. Das Betätigungselement 32 wird dadurch von der ersten Position P1 in die zweite Position P2 geführt. Die Getriebestangen 34, 36 ziehen sodann die beiden Verschlusselemente 22, 24 auseinander, die um die entsprechenden Achsen S1, S2 verschwenken und sich an ihrer Kontaktstelle 30 trennen. Ist das Betätigungselement 32 ausreichend weit in Richtung des Führungsgriffs 44 gezogen, sind sowohl das erste axiale Ende 4 als auch das entsprechende erste Kupplungsglied 28 freigelegt (vgl. Fig. 5 und 7), und das erste Kupplungsglied 28 kann mit dem entsprechenden Gegen-Kupplungsglied an den Trinkwassertank gekuppelt werden. Ist dies geschehen, kann Frischwasser durch die Trinkwasserkupplung 1 geleitet werden.

Nach Abschluss eines Füllvorgangs ergreift der Bediener wiederum den Führungsgriff 44 und dreht diesen, sodass die hintergreifbaren Vorsprünge 46, 48 des ersten Kupplungsglieds 28 außer Eingriff von dem entsprechenden Gegen-Kupplungsglied kommen und die Trinkwasserkupplung 1 von dem Trinkwassertank abgezogen werden kann. Durch die Vorspannung der Verschlusselemente 22, 24 schnappen diese automatisch zusammen, und das erste axiale Ende 4 sowie auch das erste Kupplungsglied 28 sind wiederum vor Kontamination durch Kontakt geschützt.

## Patentansprüche

1. Trinkwasserkupplung (1) zum Kuppeln mit einem Anschluss eines Trinkwassertanks, aufweisend:
- einen Stutzen (2) mit einem ersten axialen Ende (4), das eine Auslassöffnung (6) aufweist und einem zweiten axialen Ende (12) zum Anschluss an einen Zuleitungsschlauch,
- ein Kupplungsglied (28) zum Kuppeln mit einem entsprechenden Gegen-Kupplungsglied des Trinkwassertanks, wobei das Kupplungsglied (28) so ausgebildet ist, dass bei Kupplung mit dem Gegen-Kupplungsglied eine flüssigkeitsgängige Verbindung herstellbar ist, und
- eine Schutzeinrichtung (20) zum Kontaminationsschutz, die dazu eingerichtet ist, wenigstens das erste axiale Ende (4) in einem entkuppelten Zustand vor Kontamination durch Kontakt zu schützen, wobei die Schutzeinrichtung (20) wenigstens ein beweglich an dem Stutzen (2) gelagertes erstes Verschlusselement (22) aufweist, welches zwischen einer geschlossenen Position (P3), in der das Verschlusselement (22) das erste axiale Ende (4) wenigstens teilweise verschließt, und einer geöffneten Position (P4), in der das Verschlusselement (22) das erste axiale Ende (4) freigibt, bewegbar ist;
**gekennzeichnet durch** ein Betätigungselement (32) für die Schutzeinrichtung (20), welches durch einen Bediener betätigbar ist, sodass das erste axiale Ende (4) zum Herstellen einer flüssigkeitsgängigen Verbindung freilegbar ist, wobei das Betätigungselement (32) mit dem Verschlusselement (22) verbunden ist und das Verschlusselement (22) mittels des Betätigungselements (32) in die geöffnete Position (P4) verbringbar ist.

2. Trinkwasserkupplung nach Anspruch 1, wobei das Verschlusselement (22) in die geschlossene Position (P3) vorgespannt ist.

3. Trinkwasserkupplung nach Anspruch 1 oder 2, wobei das Verschlusselement (22) mittels einer Feder (40) in die geschlossene Position (P3) vorgespannt ist.

4. Trinkwasserkupplung nach einem der vorstehenden Ansprüche, wobei das Betätigungselement (32) entlang einer ersten Bewegungsbahn bewegbar ist und derart mit dem Verschlusselement (22) gekuppelt ist, dass dieses bei Betätigung des Betätigungselements (32) entlang einer zweiten Bewegungsbahn bewegbar ist.

5. Trinkwasserkupplung nach einem der vorstehenden Ansprüche, wobei das Betätigungselement (32) axial verschieblich an dem Stutzen (2) gelagert ist.

6. Trinkwasserkupplung nach einem der vorstehenden Ansprüche, wobei das Verschlusselement (22) zwischen der geschlossenen und geöffneten Position (P3, P4) verschwenkbar ist.

7. Trinkwasserkupplung nach einem der vorstehenden Ansprüche, aufweisend ein zweites Verschlusselement (24), wobei das erste und das zweite Verschlusselement (22, 24) das erste axiale Ende (4) gemeinsam verschließen.

8. Trinkwasserkupplung nach einem der vorstehenden Ansprüche, wobei das Verschlusselement (22, 24) im Wesentlichen teilkugelförmig gebildet ist.

9. Trinkwasserkupplung nach einem der vorstehenden Ansprüche, ferner aufweisend einen Führungsgriff (44) zum Führen und Halten der Trinkwasserkupplung (1) beim Kuppeln.

## Claims

1. A drinking water coupling (1) for coupling to a connection of a drinking water tank, comprising:
- a stub (2) with a first axial end (4) comprising an outlet opening (6) and a second axial end (12) for connecting a feed hose,
- a coupling member (28) for coupling to a corresponding counter-coupling member of the drinking water tank, the coupling member (28) being configured such that upon coupling with the counter-coupling member a fluid connection can be established, and
- a protective device (20) for contamination protection, configured to protect at least the first axial end (4) from contamination in an uncoupled state, wherein the protective device (20) comprises at least one closure element (22) movably connected to the stub (2) that is movable from a closed position (P3), in which the closure element (22) at least partially closes the first axial end (4), to an open position (P4), in which the closure element (22) unblocks the first axial end (4),
**characterized by** an actuating element (32) for the protective device (20) operable by an operator, such that the fist axial end (4) can be uncovered to establish a fluid connection, wherein the actuating element (32) is connected to the closure element (22), and wherein the closure element (22) can be brought into the open position (P4) by the actuating element (32).

2. The drinking water coupling according to claim 1, wherein the closure element (22) is biased into the closed position (P3).

3. The drinking water coupling according to claim 1 or 2, wherein the closure element (22) is biased into the closed position (P3) by a spring (40).

4. The drinking water coupling according to one of the preceding claims, wherein the actuating element (32) is movable along a first trajectory and coupled to the closure element (22) such that the closure element (22) is movable along a second trajectory upon actuation of the actuating element (32).

5. The drinking water coupling according to one of the preceding claims, wherein the actuating element (32) is mounted to stub (2) to be axially displaceable.

6. The drinking water coupling according to one of the preceding claims, wherein the closure element (22) is pivotable between the closed and open position (P3, P4).

7. The drinking water coupling according to one of the preceding claims, comprising a second closure element (24), wherein the first and second closure elements (22, 24) collectively close the axial end (4).

8. The drinking water coupling according to one of the preceding claims, wherein the closure element (22, 24) is generally partially spherical.

9. The drinking water coupling according to one of the preceding claims, further comprising a guide handle (44) for guiding and holding the drinking water coupling (1) during coupling.

## Revendications

1. Raccord pour eau potable (1) destiné à être couplé à un raccordement d'un réservoir d'eau potable, présentant :
- une tubulure (2) avec une première extrémité axiale (4), qui présente une ouverture de sortie (6), et une seconde extrémité axiale (12) destinée à être raccordée à un tuyau flexible de conduit d'arrivée,
- un organe de couplage (28) destiné à être couplé à un contre-organe de couplage correspondant du réservoir d'eau potable, dans lequel l'organe de couplage (28) est réalisé de telle sorte que lors du couplage au contre-organe de couplage, une liaison courante pour du liquide peut être établie, et
- un dispositif de protection (20) pour la protection contre la contamination, qui est mis au point pour protéger au moins la première extrémité axiale (4) dans un état découplé avant la contamination par contact, dans lequel le dispositif de protection (20) présente au moins un premier élément de fermeture (22) monté de manière mobile au niveau de la tubulure (2), lequel peut être déplacé entre une position fermée (P3), dans laquelle l'élément de fermeture (22) ferme au moins en partie la première extrémité axiale (4), et une position ouverte (P4), dans laquelle l'élément de fermeture (22) dégage la première extrémité axiale (4),
**caractérisé par** un élément d'actionnement (32) pour le dispositif de protection (20), lequel peut être actionné par un utilisateur de sorte que la première extrémité axiale (4) peut être mise à découvert pour établir une liaison courant pour du liquide, dans lequel l'élément d'actionnement (32) est relié à l'élément de fermeture (22) et l'élément de fermeture (22) peut être amené dans la position ouverte (P4) au moyen de l'élément d'actionnement (32).

2. Raccord pour eau potable selon la revendication 1, dans lequel l'élément de fermeture (22) est précontraint dans la position fermée (P3).

3. Raccord pour eau potable selon la revendication 1 ou 2, dans lequel l'élément de fermeture (22) est précontraint dans la position fermée (P3) au moyen d'un ressort (40).

4. Raccord pour eau potable selon l'une quelconque des revendications précédentes, dans lequel l'élément d'actionnement (32) peut être déplacé le long d'une première trajectoire de déplacement et est couplé de telle manière à l'élément de fermeture (22) que celui-ci peut être déplacé le long d'une deuxième trajectoire de déplacement lors de l'actionnement de l'élément d'actionnement (32).

5. Raccord pour eau potable selon l'une quelconque des revendications précédentes, dans lequel l'élément d'actionnement (32) est monté de manière à pouvoir coulisser axialement au niveau de la tubulure (2).

6. Raccord pour eau potable selon l'une quelconque des revendications précédentes, dans lequel l'élément de fermeture (22) peut pivoter entre la position fermée et la position ouverte (P3, P4).

7. Raccord pour eau potable selon l'une quelconque des revendications précédentes, présentant un deuxième élément de fermeture (24), dans lequel le premier et le deuxième élément de fermeture (22, 24) ferment conjointement la première extrémité axiale (4).

8. Raccord pour eau potable selon l'une quelconque des revendications précédentes, dans lequel l'élément de fermeture (22, 24) est formé sensiblement en forme de demi-sphère.

9. Raccord pour eau potable selon l'une quelconque des revendications précédentes, présentant en outre une poignée de guidage (44) pour guider et maintenir le raccord pour eau potable (1) lors du couplage.
